# EUROPÄISCHE PATENTSCHRIFT

(11) **EP 1 451 024 B1**
(45) Veröffentlichungstag und Bekanntmachung des Hinweises auf die Patenterteilung: **18.04.2007**
(21) Anmeldenummer: 02791734.3
(22) Anmeldetag: 29.11.2002
(51) Int. Cl.: B60B 35/00, B60B 35/08

(54) **RADLAGERUNG AN EINEM ACHSKÖRPER FÜR FAHRZEUGE**
WHEEL BEARING ON AN AXLE BODY FOR VEHICLES
LOGEMENT DE ROUE SITUE SUR UN CORPS D'ESSIEU DESTINE A DES VEHICULES

(30) Priorität: 04.12.2001 DE 20119640 U
(43) Veröffentlichungstag der Anmeldung: 01.09.2004
(73) Patentinhaber: Otto Sauer Achsenfabrik GmbH, 63856 Bessenbach-Keilberg (DE)
(72) Erfinder: KOSCHINAT, Hubert, B., 63768 Hösbach (DE)
(74) Vertreter: KEIL & SCHAAFHAUSEN Patentanwälte
(86) Internationale Anmeldenummer: PCT/EP2002/013468
(87) Internationale Veröffentlichungsnummer: WO 2003/047883

(56) Entgegenhaltungen:
- US-A- 4 455 732
- US-A- 5 281 005
- US-A- 5 538 330
- US-B1- 6 325 463

## Beschreibung

Die Erfindung bezieht sich auf eine Radlagerung an einem als Achsrohr ausgebildeten Achskörper für Fahrzeuge, insbesondere Nutzfahrzeuge, bei welcher das Rad z.B. über Radbolzen an einer an dem Achsstummel des Achsrohres drehbar gelagerten Radnabe befestigt und der Achsstummel als gesondertes Bauteil mit einem Endabschnitt des Achsrohres verspannt ist.

Die Merkmale des Oberbegriffs von Anspruch sind aus der US-A-5 281 005 bekannt, wobei der Endabschnitt des Achsrohres innen zylindrisch ausgebildet ist und der Achsstummel mit einem außen entsprechend zylindrischen Abschnitt in den Endabschnitt eingepaßt und über Spannmittel verspannt ist.

Für Personenkraftwagen-Achsen ist es bekannt, den Achsstummel als gesondertes Bauteil über Flanschverbindungen mit dem übrigen Teil des Achskörpers zu verbinden. Auf diese Weise soll die Schnittstelle zwischen Rad bzw. Radnabe und Achskörper, d. h. an dem Radlager, an eine Stelle zwischen Achsstummel und Achskörper verlegt werden, so dass bei einer Erneuerung der Bremsscheibe die Lagerung des Rades, d. h. das Radlager, nicht beeinträchtigt wird, weil es niemals mehr herausgenommen werden muss. Derartige Flanschverbindungen sind jedoch nicht geeignet, um die erheblichen Kräfte bei Nutzfahrzeugen aufzunehmen.

Deswegen ist bereits vorgeschlagen worden, den gesonderten Achsstummel mit einem konischen Verbindungsabschnitt zu versehen, welcher in einen zum Achsende hin offenen Innenkonus des Endabschnittes mittels einer axialen Schraube axial eingespannt wird. Diese Radlagerung ist jedoch sehr aufwändig in Herstellung und Montage und kann außerdem zu einer unerwünschten Aufweitung des Endabschnittes des Achsrohres führen.

Aufgabe der vorliegenden Erfindung ist es daher, eine Radlagerung der eingangs genannten Art vorzuschlagen, welche einfach in der Herstellung und Montage sowie dauerhaft in ihrer Funktion ist.

Diese Aufgabe wird erfindungsgemäß z. B. dadurch gelöst, dass der Endabschnitt des Achsrohres innen zylindrisch und mit wenigstens einem Längsschlitz ausgebildet, der Achsstummel mit einem außen entsprechend zylindrischen Verbindungsabschnitt in den Endabschnitt des Achsrohres eingepasst und der Endabschnitt des Achsrohres mit dem Verbindungsabschnitt des Achsstummels mittels wenigstens eines auf dem Endabschnitt des Achsrohres sitzenden, in Längsrichtung durchgehend geschlitzten Spannringes radial verspannt ist.

Die zylindrische Passung ist im Gegensatz zu der von konischen Flächen einfacher herzustellen, dauerhaft in der Funktion und einfach wieder zu lösen. Sie führt insbesondere zu keiner Aufweitung des Endabschnittes des Achsrohres, welches zusätzlich durch die radiale Klemmwirkung des Spannringes verhindert wird. Außerdem können von dieser Radlagerung wesentlich höhere Kräfte aufgenommen werden als von herkömmlichen Flanschverbindungen.

Die erfindungsgemäße Lösung ist insbesondere dann von besonderem Vorteil, wenn der ohnehin notwendige, auf dem Achskörper festgelegte Bremskörper den Spannring bildet, d. h. der Spannring Teil bzw. integrierter Bestandteil des Bremsträgers ist. Auf diese Weise erhält der Bremsträger eine Doppelfunktion.

Während der bisherige Bremsträger durch zwei Schweißverbindungen rundum mit dem Achskörper verbunden werden muss, genügt bei der erfindungsgemäßen Nutzung lediglich ein Anheften (Haftschweißen) des Bremsträgers an dem Achsrohrumfang, um lediglich seine Positionierung sicherzustellen. Das aufwändige Verschweißen entfällt. Das gleiche trifft auch für einen gesonderten Spannring zu, der allenfalls in der richtigen Position an dem Achsrohr zu sichern ist.

Der Spannring kann dabei im einfachsten Fall beidseits des Ringschlitzes je einen von einem Gewindebolzen durchsetzten Spannflansch aufweisen, wobei der Gewindebolzen entweder mit einem Innengewinde des einen Spannflansches oder mit einer eigenen Mutter zusammenwirken kann.

Vorteilhafterweise fluchten Längsschlitz des Endabschnittes des Achsrohres und der Ringschlitz, wobei sie beide vorzugsweise achsparallel verlaufen.

Zur vollständigen Ausnutzung der maximalen Klemmkraft des Gewindebolzens, ohne diesen durch Verbiegen der Spannflansche auf Biegen zu beanspruchen, können die Spannflansche z. B. an ihren äußeren Enden über eine Brücke miteinander verbunden sein. Auf diese Weise kann der Spannweg nur im elastischen Bereich des Spannring- bzw. Bremsträgermaterials bewerkstelligt werden.

Der Längsschlitz des Endabschnittes des Achsrohres kann an seinem inneren Ende in ein gegenüber der Breite des Schlitzes erweitertes Rundloch münden, um den Längsschlitz in seiner Länge sicher zu begrenzen.

Als zusätzliche Sicherung gegen axiales Herauswandern des Achsstummels kann z. B. mindestens eine Schraube radial am Achsrohr positioniert werden, indem an dem Achsrohr eine örtliche Verstärkung mit Innengewinde für die Aufnahme der Schraube derart vorgesehen ist, dass das innere Schraubenende in eine umlaufende Nut des Achsstummels eingreift. Die örtlichen Verstärkungen können auch jeweils den Abschluss der Längsschlitze bilden, sie kann auch einteilig mit dem Achsrohr umlaufend fest verbunden sein. Die örtliche Verstärkung kann auch Teil des Spannringes sein.

Bei einer weiteren Ausgestaltung der Erfindung ist vorgesehen, dass der Achsstummel an seinem äußeren Ende zur axialen Festlegung des Radlagers nach außen umgebördelt ist. Da bei der erfindungsgemäßen Radlagerung das Radlager selbst nicht mehr demontiert zu werden braucht, kann auf diese Weise dem Radlager ein sicherer Sitz in dem Achsstummel gegeben werden.

Weitere Ziele, Merkmale, Vorteile und Anwendungsmöglichkeiten der Erfindung ergeben sich aus der nachfolgenden Beschreibung von Ausführungsbeispielen anhand der Beschreibung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1: ein Ausführungsbeispiel der erfindungsgemäßen Radlagerung, teilweise geschnitten und weggebrochen,
- Fig. 2: eine Ansicht des nach der Erfindung vorgesehenen in einem Endabschnitt längsgeschlitzten Achsrohr,
- Fig. 3: in stirnseitiger Ansicht einen erfindungsgemäß mit durchgehendem Ringschlitz versehenen und auf einem Achsrohr radial aufspannbaren Bremsträger und
- Fig. 4: verschiedene Alternativen einer erfindungsgemäßen Radlagerung in Darstellungen entsprechend Fig. 1.

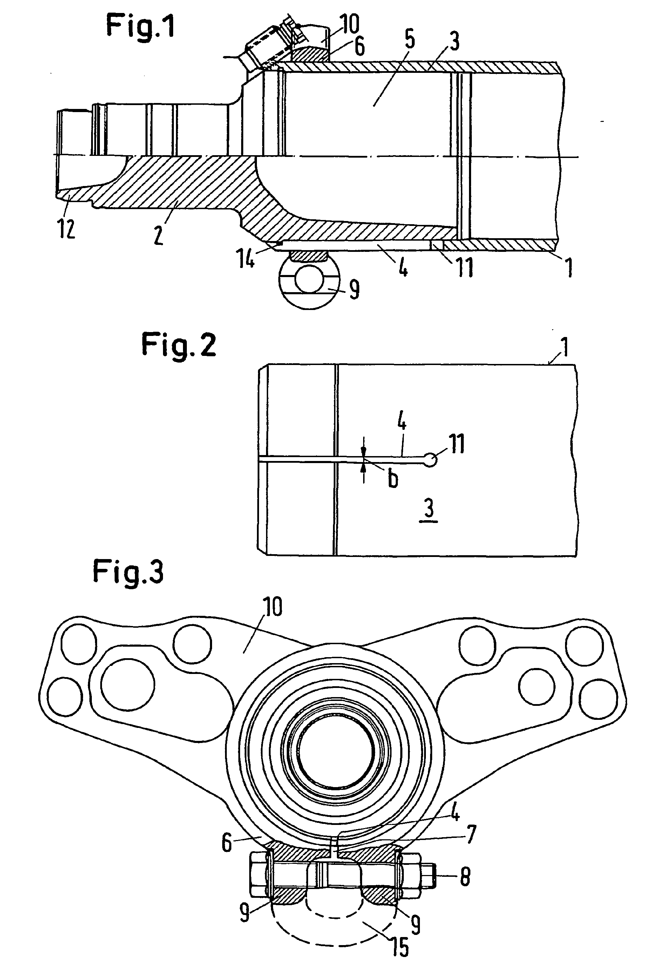

Die erfindungsgemäße Radlagerung ist gemäß Fig. 1 an einem als Achsrohr 1 ausgebildeten Achskörper für Fahrzeuge, insbesondere Nutzfahrzeuge, vorgesehen. Das (nicht dargestellte) Rad ist bei einer solchen Radlagerung bspw. über (ebenfalls nicht dargestellte) Radbolzen an einer an dem Achsstummel 2 des Achsrohres 1 drehbar gelagerten (nicht dargestellten) Radnabe befestigt. Der Achsstummel 2 ist als gesondertes Bauteil mit dem Endabschnitt 3 des Achsrohres 1 radial verspannt. Zu diesem Zweck ist der Endabschnitt 3 des Achsrohres 1 innen zylindrisch ausgebildet. Der Endabschnitt 3 ist mit wenigstens einem achsparallelen Längsschlitz 4 ausgestattet. Der Achsstummel 2 ist mit einem außen ebenfalls zylindrischen Verbindungsabschnitt 5 in den Endabschnitt 3 des Achsrohres 1 eingepasst, wobei der Endabschnitt 3 des Achsrohres 1 und der Verbindungsabschnitt 5 des Achsstummels 2 mittels wenigstens eines auf dem Endabschnitt 3 des Achsrohres 1 sitzenden, in Längsrichtung durchgehend geschlitzten Spannringes 6 radial verspannt ist. Dabei bildet der Spannring 6 im dargestellten Fall einen integrierten Bestandteil des Bremsträgers 10. Zum Verspannen des Bremsträgers 10 auf dem Endabschnitt 3 des Achsrohres 1 und damit des Endabschnittes 3 des Achsrohres 1 auf dem Verbindungsabschnitt 5 des Achsstummels 2 dient ein Gewindebolzen 8, welcher mit zwei augenartigen Spannflanschen 9, 9 zusammenwirkt. Aufgrund der so erzielten Klemmwirkung des Bremsträgers 10 auf dem Achsrohr 1 ist kein aufwändiges Rundumschweißen des Bremsträgers 10 auf dem Achsrohr 1 erforderlich, sondern lediglich ein Anheften zu dessen Positionierung, vorzugsweise in einem Bereich gegenüber des Längsschlitzes 4, um das Festspannen des Endabschnittes 3 nicht zu behindern.

Wie aus Fig. 2 ersichtlich ist, endet der Schlitz 4 der Breite b in einem Rundloch 11 mit dieser gegenüber erweitertem Durchmesser, um ein Ausreißen des Längsschlitzes 4 zu verhindern.

Wie aus Fig. 3 ersichtlich ist, sind der achsparallele Längsschlitz 4 des Endabschnitts 3 des Achsrohres 1 und der ebenfalls achsparallele Ringschlitz 7 zur Deckung gebracht, so dass ein Anheften des Bremsträgers 10 an dem Außenumfang des Achsrohres 1 die radiale Spannwirkung nicht beeinträchtigt.

In Fig. 3 ist auch angedeutet, dass die Spannflansche 9 zur vollständigen Nutzung der maximalen Klemmkraft der Gewindebolzen 8 an ihren äußeren Enden über eine Brücke 15 miteinander verbunden sein können.

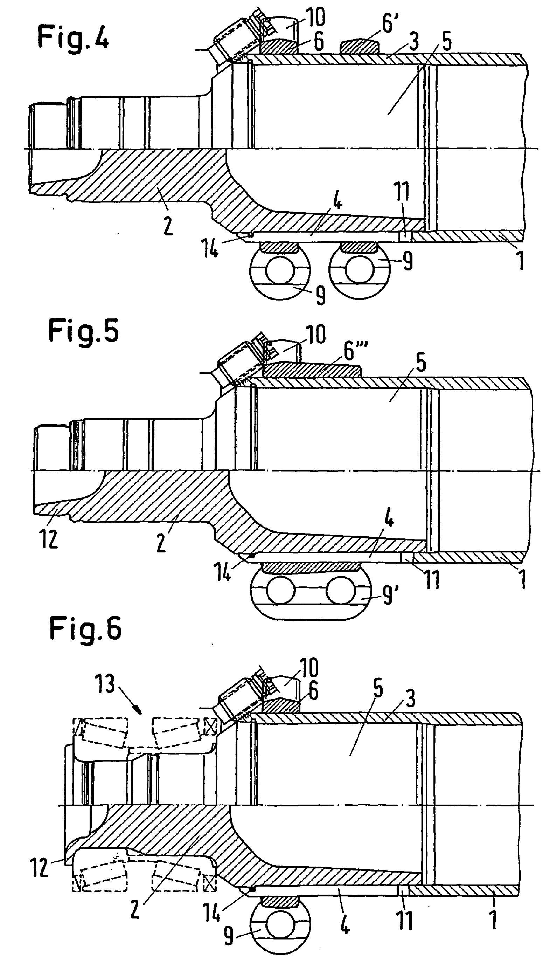

In Fig. 4 ist beispielhaft veranschaulicht, dass abgesehen von der Verwendung eines einzigen, von dem Bremsträger 10 unabhängigen Spannringes 6, neben dem Bremsträger 10 ein weiterer Spannring 6', welcher im axialen Abstand von ersterem auf dem Achsrohr 1 angeordnet ist, dienen kann. Gemäß Fig. 5 ist es auch möglich, den einzigen Spannring 6 als Bestandteil des Bremsträgers 10 axial zu verlängern. Beide Maßnahmen dienen der Verteilung der Spannkraft über die Länge des geschlitzten Endabschnittes 3 des Achsrohres 1.

Anhand des Ausführungsbeispieles von Fig. 6 wird veranschaulicht, dass der Achsstummel 2 an seinem äußeren Ende 12 zur axialen Festlegung des Radlagers 13 nach außen umgebördelt sein kann. Damit ist eine dauerhafte Sicherung des Radlagers 13 in seiner axialen Lage gewährleistet.

Gegen Eindringen von Feuchtigkeit zwischen dem Verbindungsabschnitt 5 des Achsstummels 2 und dem Endabschnitt 3 des Achsrohres 1 kann als Dichtung ein O-Ring 14 vorgesehen sein, außerdem ist es möglich, insbesondere dort eine Korrosionsschutzschicht vorzusehen. Alle nicht-verschweißten Spalten können auch nach der Montage mit einer dauerelastischen Masse abgedichtet sein.

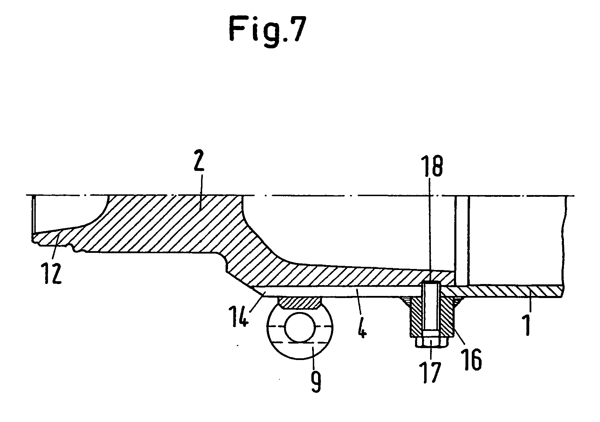

In Fig. 7 ist ein Ausführungsbeispiel einer Sicherungseinrichtung für den Achsstummel 2 an dem Endabschnitt 3 des Achsrohres 1 gezeigt. Sie ist von einer in eine an das Achsrohr 1 angeschweißten Verstärkung 16 mit Innengewinde eindrehbaren Schraube 17 gebildet, welche in ihrer Sicherungsstellung mit ihrem inneren Ende in eine umlaufende Nut 18 des Achsstummels 2 hineinragt und zwar in dem dargestellten Fall, z.B. im Bereich des erweiterten Lochs 11 am Ende des Schlitzes 4.

### Bezugszeichenliste:

- 1: Achsrohr
- 2: Achsstummel
- 3: Endabschnitt des Achsrohrs 1
- 4: Längsschlitz
- 5: Verbindungsabschnitt
- 6, 6', 6"': Spannring
- 7: Ringschlitz
- 8: Gewindebolzen
- 9, 9': Spannflansch
- 10: Bremsträger
- 11: Loch
- 12: äußeres Ende des Achsstummels 2
- 13: Radlager
- 14: O-Ring
- 15: Brücke
- 16: örtliche Verstärkung
- 17: Sicherungselement (Schraube)
- 18: Nut

## Patentansprüche

1. Radlagerung an einem als Achsrohr (1) ausgebildeten Achskörper für Fahrzeuge, insbesondere Nutzfahrzeuge, bei welcher das Rad z. B. über Radbolzen an einer an dem Achsstummel (2) des Achsrohres (1) drehbar gelagerten Radnabe befestigt und der Achsstummel (2) als gesondertes Bauteil mit einem Endabschnitt (3) des Achsrohres (1) verspannt ist, **dadurch gekennzeichnet, dass** der Endabschnitt (3) des Achsrohres (1) innen zylindrisch und mit wenigstens einem Längsschlitz (4) ausgebildet, der Achsstummel (2) mit einem außen entsprechend zylindrischen Verbindungsabschnitt (5) in den Endabschnitt (3) des Achsrohres (1) eingepasst und der Endabschnitt (3) des Achsrohres (1) mit dem Verbindungsabschnitt (5) des Achsstummels (2) mittels wenigstens eines auf dem Endabschnitt (3) des Achsrohres (1) sitzenden Spannringes (6) radial verspannt ist, der in Längsrichtung durchgehend geschlitzt ist, wodurch ein Ringschlitz (7) gebildet ist.

2. Radlagerung nach Anspruch 1, **dadurch gekennzeichnet, dass** der Spannring (6) Teil bzw. integrierter Bestandteil des Bremsträgers (10) ist.

3. Radlagerung nach Anspruch 1 oder 2, **dadurch gekennzeichnet, dass** der Spannring (6), insbesondere wenn er integrierter Bestandteil des Bremsträgers (10) ist, zur Positionierung an den Endabschnitt (3) des Achsrohres (1), z. B. mittels Heftschweißung, angeheftet ist.

4. Radlagerung nach einem der Ansprüche 1 bis 3, **dadurch gekennzeichnet, dass** der Längsschlitz (4) des Endabschnittes (3) des Achsrohres (1) mit dem Ringschlitz (7) fluchtet.

5. Radlagerung nach einem der Ansprüche 1 bis 4, **dadurch gekennzeichnet, dass** der Spannring (6) beidseits des Ringschlitzes (7) je einen von einem Gewindebolzen (8) durchsetzten Spannflansch (9) aufweist.

6. Radlagerung nach Anspruch 5, **dadurch gekennzeichnet, dass** die Spannflansche (9, 9) unter einer Brücke (15) miteinander verbunden sind.

7. Radlagerung nach einem der Ansprüche 1 bis 6, **dadurch gekennzeichnet, dass** der Längsschlitz (4) des Endabschnittes (3) des Achsrohres (1) an seinem inneren Ende in ein gegenüber seiner Schlitzbreite (b) erweitertes Rundloch (11) mündet

8. Radlagerung nach einem der Ansprüche 1 bis 7, **gekennzeichnet durch** mindestens eine Sicherungseinrichtung (16, 17, 18) für den Achsstummel (2) an den Endabschnitt (3) des Achsrohres (1).

9. Radlagerung nach einem der Ansprüche 1 bis 8, **dadurch gekennzeichnet, dass** der Achsstummel (2) an seinem äußeren Ende (12) zur axialen Festlegung des Radlagers (13) nach außen umgebördelt ist.

## Claims

1. Wheel bearing mounted on an axle body in the form of an axle tube (1) for vehicles, in particular commercial vehicles, whereby the wheel is fixed e.g. with wheel bolts to a wheel hub, which is pivot-mounted on the axle stub (2) of the axle tube (1), and whereby the axle stub (2) is clamped on to an end section (3) of the axle tube (1) as a separate component, **characterized in that** the inside of the end section (3) of the axle tube (1) is cylindrical and has at least one longitudinal slit (4), with the axle stub (2) being fitted into the end section (3) of the axle tube (1) with an external correspondingly cylindrical connecting section (5) and with the end section (3) of the axle tube (1) being radially clamped on to the connecting section (5) of the axle stub (2) by means of at least one clamping ring (6), which is positioned on the end section (3) of the axle tube (1) and which is longitudinally continuously split, thereby forming a ring slit (7).

2. Wheel bearing according to claim 1, **characterized in that** the clamping ring (6) is part or else an integral part of a brake bracket (10).

3. Wheel bearing according to claim 1 or 2, **characterized in that** the clamping ring (6), in particular if it is an integral part of the brake bracket (10), is attached e.g. by means of tack-welding for positioning on the end section (3) of the axle tube (1).

4. Wheel bearing according to one of claims 1 to 3, **characterized in that** the longitudinal slit (4) of the end section (3) of the axle tube (1) aligns with the ring slit (7).

5. Wheel bearing according to one of claims 1 to 4, **characterized in that** the clamping ring (6) comprises a clamping flange (9) traversed by a threaded bolt (8) on either side of the ring slit (7).

6. Wheel bearing according to claim 5, **characterized in that** the clamping flanges (9, 9) are interconnected by a bridge (15).

7. Wheel bearing according to one of claims 1 to 6, **characterized in that** the longitudinal slit (4) of the end section (3) of the axle tube (1) ends at its inside end in a round perforation (11) slightly wider than its slit width (b).

8. Wheel bearing according to one of claims 1 to 7, **characterized by** at least one device (16, 17, 18) for securing the axle stub (2) at the end section (3) of the axle tube (1).

9. Wheel bearing according to one of claims 1 to 8, **characterized in that** the axle stub (2) is flanged outwardly at its extremity (12) for axially securing the wheel bearing (13).

## Revendications

1. Logement de roue sur un corps d'essieu conçu sous la forme d'un tube d'essieu (1) pour des véhicules automobiles, notamment des véhicules utilitaires, dans lequel la roue est fixée, par exemple à l'aide de boulons de roue, sur un moyeu logé pivotant sur la fusée (2) du tube d'essieu (1) et la fusée (2), en tant que pièce séparée, est serré contre une extrémité (3) du tube d'essieu (1), **caractérisé en ce que** l'extrémité (3) du tube d'essieu (1) est formée à l'intérieur de façon cylindrique et avec au moins une fente longitudinale (4), la fusée (2) est adaptée dans l'extrémité (3) du tube d'essieu (1) avec une section de liaison (5) cylindrique à l'extérieur de façon correspondante et l'extrémité (3) du tube d'essieu (1) est serrée radialement contre la section de liaison (5) de la fusée (2) au moyen d'au moins un collier de serrage (6) placé sur l'extrémité (3) du tube d'essieu (1), lequel collier tendeur est fendu de part en part en direction de la longueur, grâce à quoi une fente de collier (7) est formée.

2. Logement de roue selon la revendication 1, **caractérisé en ce que** le collier tendeur (6) fait partie ou est un élément intégré du flasque de frein (10).

3. Logement de roue selon la revendication 1 ou 2, **caractérisé en ce que** le collier tendeur (6), notamment lorsqu'il est un élément intégré du flasque de frein (10) est pointé pour le positionnement sur l'extrémité (3) du tube d'essieu (1), par exemple au moyen de soudage d'assemblage.

4. Logement de roue selon l'une des revendications 1 à 3, **caractérisé en ce que** la fente longitudinale (4) de l'extrémité (3) du tube d'essieu (1) est alignée avec la fente de collet (7).

5. Logement de roue selon l'une des revendications 1 à 4, **caractérisé en ce que** le collet de serrage (6) présente de chaque côté de la fente de collet (7) une bride de serrage (9) traversée par un boulon fileté (8).

6. Logement de roue selon la revendication 5, **caractérisé en ce que** les brides de serrage (9, 9) sont reliées ensemble par un pont (15).

7. Logement de roue selon l'une des revendications 1 à 6, **caractérisé en ce que** la fente longitudinale (4) de l'extrémité (3) du tube d'essieu (1) débouche par son extrémité intérieure dans un trou rond (11) élargi par rapport à sa largeur de fente (b).

8. Logement de roue selon l'une des revendications 1 à 7, **caractérisé par** au moins un dispositif de sûreté (16, 17, 18) pour la fusée (2) à l'extrémité (3) du tube d'essieu (1).

9. Logement de roue selon l'une des revendications 1 à 8, **caractérisé en ce que** la fusée (2) à son extrémité extérieure (12) est rabattue vers l'extérieure à son extrémité extérieure (12) pour la fixation axiale du roulement de la roue (13).
